# EUROPEAN PATENT APPLICATION

(11) **EP 4 779 710 A1**
(43) Date of publication of application: **22.07.2026**
(21) Application number: 25780570.5
(22) Date of filing: 17.01.2025
(51) Int. Cl.: H01M 4/36, H01M 4/58, H01M 4/48, H01M 4/62, H01M 4/136, H01M 10/0525, B82Y 30/00, B82Y 40/00

(54) **POSITIVE ELECTRODE MATERIAL, PREPARATION METHOD THEREFOR, POSITIVE ELECTRODE SHEET AND BATTERY**

(30) Priority: 22.10.2024 CN 202411481074
(71) Applicant: Eve Power Co., Ltd., Jingmen, Hubei 448000 (CN)
(72) Inventor: HUANG, Chengjie, Jingmen, Hubei 448000 (CN); WEI, Haitao, Jingmen, Hubei 448000 (CN); ZHU, Weihua, Jingmen, Hubei 448000 (CN); ZHAO, Zhenshuai, Jingmen, Hubei 448000 (CN)
(74) Representative: Studio Torta S.p.A.
(86) International application number: PCT/CN2025/073092
(87) International publication number: WO 2026/086037

(57) **Abstract**

A positive electrode material and a preparation method thereof, a positive electrode sheet, and a battery are provided. The positive electrode material includes lithium manganese iron phosphate particles and a first shell layer and a second shell layer that sequentially coat surfaces of the lithium manganese iron phosphate particles. A material of the first shell layer includes nano-sized SiO₂ particles, and a material of the second shell layer includes nano-sized TiO₂ particles. According to the present disclosure, the SiO₂ layer and the TiO₂ layer sequentially coat the surfaces of the lithium manganese iron phosphate particles, so that the contact between the lithium manganese iron phosphate particles and the electrolyte can be reduced, the occurrence of side reactions between the lithium manganese iron phosphate particles and the electrolyte in the electrochemical reaction process thereof can be inhibited, thereby alleviating the cycle life attenuation of the battery, reducing the dissolution of the Mn element, relieving the increase of the battery impedance caused by the deposition of Mn²⁺ on the negative electrode in the cycle process.

## Description

This application claims priority to Chinese Patent Application No. 2024114810741, filed with the Chinese Patent Office on October 22, 2024, the entire contents of which are incorporated herein by reference.

### TECHNICAL FIELD

The present disclosure relates to the field of batteries, and more particularly, to a positive electrode material and a preparation method thereof, a positive electrode sheet, and a battery.

### BACKGROUND

Lithium manganese iron phosphate (LMFP) is a novel positive electrode material used for phosphate-based lithium-ion batteries and derived from lithium iron phosphate (LFP) by doping manganese elements. With the same olivine structure as lithium iron phosphate, LMFP retains the same safety performance as that of lithium iron phosphate while exhibiting a higher voltage platform, and thereby LMFP has a higher energy density and a better low-temperature performance, thus attracting significant attention.

However, lithium manganese iron phosphate currently has poor electrical conductivity, rate performance, and cycle performance. Generally, the lithium manganese iron phosphate is modified by three processes: 1) coating the surface of LMFP with a carbon material having electrical conductivity (e.g., graphite, amorphous carbon, carbon nanotubes, and cracked carbon, etc.) to improve the electrical conductivity and electrochemical performance of LMFP; 2) introducing a small amount of "dopant" such as cobalt, nickel, and vanadium by doping to improve the electrical properties of the LMFP material; 3) nano-sizing the LMFP material to shorten the migration path of lithium ions in primary particles of the material, thereby improving the charge/discharge performance of the material. With the above three approaches and processes, the performance of the LMFP material can be improved. However, the electrochemical performance and the cycle performance of the material are still not satisfactory.

### SUMMARY

### Technical problem

The electrochemical and cycle performance of the lithium manganese iron phosphate in the related art are unsatisfactory.

### Technical solution

Embodiments of the present disclosure provide a positive electrode material including lithium manganese iron phosphate particles and a first shell layer and a second shell layer that sequentially coat a surface of each of the lithium manganese iron phosphate particles, a material of the first shell layer includes nanoscale SiO₂ particles and a material of the second shell layer includes nanoscale TiO₂ particles.

Embodiments of the present disclosure provide a method for preparing a positive electrode material, including the steps of dispersing SiO₂ particles in an alcohol solvent to obtain a mixed system, adding lithium manganese iron phosphate particles into the mixed system, followed by first heating and stirring to obtain first solid particles, and coating the first solid particles with nanoscale TiO₂ particles to obtain the positive electrode material.

Embodiments of the present disclosure provide a positive electrode sheet including the positive electrode material of the present disclosure.

Embodiments of the present disclosure provide a battery including the positive electrode sheet of the present disclosure.

### Beneficial effect

According to the positive electrode material in the present disclosure, the lithium manganese iron phosphate particles are sequentially coated with the SiO₂ layer and the TiO₂ layer, so that the contact between the lithium manganese iron phosphate particles and the electrolyte can be reduced, thereby minimizing side reactions between the lithium manganese iron phosphate particles and the electrolyte during electrochemical processes and mitigating battery cycle life degradation. Additionally, the coating effectively suppresses Mn dissolution, alleviating Mn²⁺ deposition on the negative electrode that would otherwise increase battery impedance during cycling. TiO₂, as an electrochemically inactive material, does not participate in an electrochemical reaction. In the process of Li ion deintercalation, the TiO₂ lattices can act as a conductor of electrons and ions, allowing Li ions to freely pass through the TiO₂ lattices, thereby improving the rate performance of the battery. SiO₂ is an electrochemically inactive material and can form a thin and uniform coating layer, while retaining high mechanical properties and long-term performance consistency after multiple charges and discharges.

### DETAILED DESCRIPTION

The technical solutions in the embodiments of the present disclosure will be clearly and fully described below.

In some embodiments, SiO₂ particles have an average particle size less than or equal to 8 nm. For example, the average particle size may be 8 nm, 7 nm, 6.5 nm, 6 nm, 5.5 nm, 5 nm, 4.5 nm, 4 nm, or 3.5 nm. In such a range, the particles may provide good coating effect on lithium manganese iron phosphate particles, reducing the occurrence of vacancies.

In some embodiments, TiO₂ particles have an average particle size less than or equal to 8 nm. For example, the average particle size may be 8 nm, 7 nm, 6.5 nm, 6 nm, 5.5 nm, 5 nm, 4.5 nm, 4 nm, or 3.5 nm. In such a range, the particles may provide good coating effect on lithium manganese iron phosphate particles, reducing the occurrence of vacancies.

In some embodiments, the TiO₂ particles are prepared from a hydrolysis reaction of tetra-n-butyl titanate, and the average particle size of the TiO₂ particles obtained from the hydrolysis reaction of tetra-n-butyl titanate is less than or equal to 8 nm.

In some embodiments, the mass ratio of the SiO₂ particles, the TiO₂ particles, and the lithium manganese iron phosphate particles in a positive electrode material is (0.3%-0.7%): (0.3%-0.7%): (98.6%-99.4%). For example, the mass ratio may be 0.7%: 0.7%: 98.6%, 0.6%: 0.6%: 98.8%, 0.5%: 0.7%: 98.8%, 0.7%: 0.5%: 98.8%, 0.5%: 0.5%: 99%, 0.3%: 0.7%: 99%, 0.7%: 0.3%: 99%, 0.4%: 0.6%: 99%, 0.6%: 0.4%: 99%, 0.4%: 0.4%: 99.2%, 0.5%: 0.3%: 99.2%, 0.3%: 0.5%: 99.2%, 0.3%: 0.3%: 99.4%, and the like. In such a range, the lithium manganese iron phosphate particles can be better coated with a coating layer formed by the SiO₂ particles and the TiO₂ particles with a suitable thickness to facilitate effective deintercalation of lithium ions.

As an example, the lithium manganese iron phosphate as used herein is represented by a chemical formula of LiMnₓFe₍₁₋ₓ₎PO₄, where 0.1≤X≤0.9.

In some embodiments, there is provided a method of preparing the positive electrode material, and the method includes the following steps S1 and S2.

Specifically, at step S1, in some embodiments, dispersing the SiO₂ particles in an alcohol solvent includes: adding SiO₂ particles into the alcohol solvent and performing stirring and sonication.

In the present disclosure, the nanoscale SiO₂ particles are easily agglomerated, but the dispersion of the nanoscale SiO₂ can be effectively realized by dispersing the nanoscale SiO₂ in an alcohol solvent in combination with sonication. In this case, the coating by the nanoscale SiO₂ particles is more uniform, and coating effect is improved.

In some embodiments, the stirring is performed for 5 min-15 min. For example, the time for stirring may be 5 min, 6 min, 7 min, 8 min, 9 min, 10 min, 11 min, 12 min, 13 min, 14 min, 15 min, or the like. The sonication is carried out for 20 min-40 min. For example, the time for sonication may be 20 min, 22 min, 24 min, 26 min, 28 min, 30 min, 32 min, 34 min, 36 min, 38 min, 40 min, or the like.

In some embodiments, the mass ratio of the SiO₂ particles, the TiO₂ particles, and the lithium manganese iron phosphate particles in the positive electrode material is (0.3%-0.7%): (0.3%-0.7%): (98.6%-99.4%). For example, the mass ratio may be 0.7%: 0.7%: 98.6%, 0.6%: 0.6%: 98.8%, 0.5%: 0.7%: 98.8%, 0.7%: 0.5%: 98.8%, 0.5%: 0.5%: 99%, 0.3%: 0.7%: 99%, 0.7%: 0.3%: 99%, 0.4%: 0.6%: 99%, 0.6%: 0.4%: 99%, 0.4%: 0.4%: 99.2%, 0.5%: 0.3%: 99.2%, 0.3%: 0.5%: 99.2%, 0.3%: 0.3%: 99.4%, and the like. In such a range, the lithium manganese iron phosphate particles can be better coated with a coating layer formed by the SiO₂ particles and the TiO₂ particles with a suitable thickness to facilitate effective deintercalation of the lithium ions.

As an example, the alcohol solvent includes isopropanol, methanol, ethanol, propanol, butanol, benzyl alcohol, or ethylene glycol. In such a way, the dispersion of the nano SiO₂ particles can be improved, and the alcohol solvent is easily volatilized, so that the operation can be facilitated, thereby improving the coating effect.

In some embodiments, the first heating is performed at a temperature of 60°C to 90°C. For example, the temperature may be 60°C, 65°C, 70°C, 75°C, 80°C, 85°C, 90°C, or the like. The first heating is performed for 4 h to 12 h. For example, the time for the first heating may be 4 h, 5 h, 6 h, 7 h, 8 h, 9 h, 10 h, 11 h, 12 h, or the like. In such a range, the solvent can be sufficiently evaporated, and the nano-SiO₂ particles can effectively coat the surface of the lithium manganese iron phosphate particles. If the temperature is too low, the solvent cannot be sufficiently evaporated. If the temperature is too high, the solvent evaporates quickly, and the surface tension of the solvent decreases, resulting in agglomeration between the SiO₂ particles.

In step S2, in some embodiments, coating the surface of the first solid particles with nanoscale TiO₂ particles includes: providing tetra-n-butyl titanate and anhydrous ethanol, dispersing the tetra-n-butyl titanate in the anhydrous ethanol, and mixing the dispersed tetra-n-butyl titanate with the first solid particles to obtain a suspension; and adding a water-containing solution to the suspension, followed by a second heating and stirring.

In the embodiments of the present disclosure, the hydrolysis of tetrabutyl titanate can generate TiO₂. When the first solid particles are added to the hydrolysis reaction of tetrabutyl titanate, the TiO₂ formed by hydrolysis can coat the first solid particles, and the coating effect can be improved. The tetrabutyl titanate can undergo coordination with anhydrous ethanol to form a complex,, thereby stabilizing the structure of the tetrabutyl titanate molecule and inhibiting the occurrence of the hydrolysis reaction. In addition, the anhydrous ethanol can sufficiently dissolve the tetrabutyl titanate to make it disperse uniformly.

In some embodiments, dispersing tetra-n-butyl titanate in absolute ethanol includes: mixing tetra-n-butyl titanate with the absolute ethanol, and followed by sonication.

In some embodiments, the sonication is performed for 20 min to 40 min. For example, the time for sonication may be 20 min, 22 min, 24 min, 26 min, 28 min, 30 min, 32 min, 34 min, 36 min, 68 min, 40 min, or the like. In such a range, tetra-n-butyl titanate can be sufficiently dispersed in absolute ethanol, and agglomeration thereof can be alleviated.

In some embodiments, the second heating is performed at a temperature of 50°C to 70°C. For example, the temperature may be 50°C, 52°C, 54°C, 56°C, 58°C, 60°C, 62°C, 64°C, 66°C, 68°C, 70°C or the like. The second heating is performed for 4 h to 8 h, and for example, the time may be 4 h, 4.5 h, 5 h, 5.5 h, 6 h, 6.5 h, 7 h, 8 h, or the like. In such a range, the ethanol can be sufficiently evaporated, and the resulting nano TiO₂ particles can effectively coat the surfaces of the lithium manganese iron phosphate particles coated with the SiO₂ particles. If the temperature is too low, the ethanol solvent cannot be sufficiently evaporated. If the temperature is too high, the solvent evaporates quickly, and the surface tension of the solvent decreases, resulting in agglomeration of TiO₂ particles.

In some embodiments, adding a water-containing solution to the suspension includes: adding an aqueous ethanol solution to the suspension.

In the present disclosure, the aqueous ethanol solution is used to dilute the concentration of water in the water-containing solution, thereby slowing the hydrolysis rate of tetrabutyl titanate. In addition, the ethanol solvent is easy to volatilize and can be conveniently operated.

In some embodiments, the volume ratio of ethanol to water in the aqueous ethanol solution is (1-3): 1, and for example, may be 1: 1, 1.2: 1, 1.4: 1, 1.6: 1, 1.8: 1, 2: 1, 2.2: 1, 2.4: 1, 2.6: 1, 2.8: 1, or 3: 1. In such a range, the hydrolysis rate of tetrabutyl titanate can be controlled by controlling the volume ratio of ethanol to water, so that the TiO₂ particles formed by the hydrolysis of tetrabutyl titanate are more uniformly distributed on the surfaces of the lithium manganese iron phosphate particles coated with the SiO₂ particles.

In some embodiments, after the surfaces of the first solid particles are coated with nanoscale TiO₂ particles, the surface-coated first solid particles are subjected to sintering to obtain a positive electrode material.

In some embodiments, sintering is performed after the second heating and stirring to obtain the positive electrode material.

In some embodiments, the sintering is performed at a temperature of 400°C to 600°C. For example, the temperature may be 400°C, 420°C, 440°C, 460°C, 480°C, 500°C, 520°C, 540°C, 560°C, 580°C, or the like. The sintering is performed for 3 h to 6 h, and for example, the time may be 3 h, 3.5 h, 4 h, 4.5 h, 5.5 h, 6 h, or the like. In such a range, the lithium manganese iron phosphate particles can be melted and regenerated so as to be more firmly bonded with the SiO₂ and TiO₂ particles, thereby reducing defects on the surfaces of the lithium manganese iron phosphate particles.

### Example 1

A method of preparing a positive electrode material includes the steps (1) to (3).

At step (1), SiO₂ particles having a particle size D50 of 6 nm were added to isopropanol and stirred for 10 min, then sonicated for 30 min. Then, LiMn_{0.5}Fe_{0.5}PO₄ particles were added and then stirred at 75°C for 8 h to obtain first solid particles, where a mass ratio of SiO₂ particles to LiMn_{0.5}Fe_{0.5}PO₄ particles was 0.5: 99.

At step (2), tetra-n-butyl titanate (C₁₆H₃₆O₄Ti) was dissolved in absolute ethanol, sonicated for 30 min, and then transferred to the first solid particles (where a mass ratio of SiO₂ particles in the first solid particles to TiO₂ formed by the tetra-n-butyl titanate was 0.5: 0.5, that is, a mass ratio of SiO₂ particles to tetra-n-butyl titanate was 0.5: 2.13), and mixed to obtain a suspension. An aqueous ethanol solution (a volume ratio of ethanol to water was 2: 1) was added to the suspension, and stirred at 60°C for 6 h to obtain a second solid particles.

At step (3), the second solid particles (powder) were added to a muffle furnace and sintered at 500°C for 4 h under an air atmosphere to obtain the positive electrode material.

### Example 2

This example differs from Example 1 in that the mass ratio of SiO₂ particles, TiO₂ formed by tetra-n-butyl titanate, and LiMn_{0.5}Fe_{0.5}PO₄ in this example was 0.3: 0.5: 99.2.

### Example 3

This example differs from Example 1 in that the mass ratio of SiO₂ particles, TiO₂ formed by tetra-n-butyl titanate, and LiMn_{0.5}Fe_{0.5}PO₄ in this example was 0.7: 0.5: 98.8.

### Example 4

This example differs from Example 1 in that the mass ratio of SiO₂ particles, TiO₂ formed by tetra-n-butyl titanate, and LiMn_{0.5}Fe_{0.5}PO₄ in this example was 0.5: 0.3: 99.2.

### Example 5

This example differs from Example 1 in that the mass ratio of SiO₂ particles, TiO₂ formed by tetra-n-butyl titanate, and LiMn_{0.5}Fe_{0.5}PO₄ in this example was 0.5: 0.7: 98.8.

### Example 6

This example differs from Example 1 in that the mass ratio of SiO₂ particles, TiO₂ formed by tetra-n-butyl titanate, and LiMn_{0.5}Fe_{0.5}PO₄ in this example was 1.2: 0.5: 98.3.

### Example 7

This example differs from Example 1 in that the mass ratio of SiO₂ particles, TiO₂ formed by tetra-n-butyl titanate, and LiMn_{0.5}Fe_{0.5}PO₄ in this example was 0.5: 1.2: 98.3.

### Example 8

This example differs from Example 1 in that the sintering temperature in Step (3) in this Example was 400°C.

### Example 9

This example differs from Example 1 in that the sintering temperature in Step (3) in this Example was 600°C

### Comparative Example 1

At step (1), SiO₂ particles (with a particle size D50 = 6 nm) and tetra-n-butyl titanate (C₁₆H₃₆O₄Ti) were added to absolute ethanol (at a mass ratio of 0.5: 0.5 of SiO₂ particles to TiO₂ formed by tetra-n-butyl titanate), stirred for 10 min, and then sonicated for 30 min to obtain a mixed system. Then, LiMn_{0.5}Fe_{0.5}PO₄ (where a mass ratio of SiO₂ particles to LiMn_{0.5}Fe_{0.5}PO₄ particles was 0.5: 99) and an aqueous ethanol solution (where a volume ratio of ethanol to water was 2: 1) were added to the mixed system, and then stirred at 75°C for 8 h to obtain first solid particles.

At step (2), the second solid powder was added to a muffle furnace and sintered at 500°C for 4 h under an air atmosphere to obtain the positive electrode material.

### Comparative Example 2

This comparative example differs from Example 1 in that step (2) was not performed in this comparative example, and the amount of SiO₂ was the same as the total amount of SiO₂ and TiO₂ production in Example 1.

### Comparative Example 3

This comparative example differs from Example 1 in that step (1) was not performed in this comparative example, and LiMn_{0.5}Fe_{0.5}PO₄ was directly added to absolute ethanol in which tetra-n-butyl titanate was dissolved, and the quality of TiO₂ produced was the same as that of SiO₂ and TiO₂ produced in Example 1.

### Test Examples:

The positive electrode materials obtained in the Examples and Comparative Examples and the uncoated LiMn_{0.5}Fe_{0.5}PO₄ were used as positive electrode active materials, the negative electrode was made of graphite as negative electrode active material, and the separator was made of PE separator. The positive electrode, the separator and the negative electrode were stacked in sequence to obtain a cell by a lamination process. The cell was placed in an outer packaging case, dried, and an electrolyte (1.2 mol/L LiPF₆ in a mixture of ethylene carbonate (EC) and ethyl methyl carbonate (EMC) in a ratio of 3: 7) was injected according to an electrolyte injection coefficient of 4.4 g/Ah, and followed by vacuum encapsulation, standing, formation and capacitance separation to obtain a lithium ion battery.

The resulting lithium-ion battery was subjected to a discharge HPPC test in which the battery was charged at a constant current and constant voltage with 4.25 V and 1/3C until reaching a cut-off current of 0.05C. After full charging, the battery was discharged at a constant current and constant current with 1/3C to cut-off capacities of 0.3C, 0.5C, and 0.7C, respectively. Subsequently, a 1C discharge pulse of 30 seconds was applied. The Hybrid Pulse Power Characterization (HPPC) at 30%, 50%, and 70% state of charge (SOC) was calculated using the following formula: R= (V₂-V₁)/1C, where V₂ was the voltage after 30 seconds of 1C discharge, V₁ was the voltage after 30 seconds of 1C discharge, and 1C=Q (with Q denoting the battery's nominal capacity).

The resulting lithium-ion battery was subjected to a discharge capacity retention test in which the battery was charged at a constant current and constant voltage with 4.25 V and 1/3C until reaching a cut-off current of 0.05C. After full charging, the battery was discharged at a constant current at 1C, 2C and 3C rates, respectively, with a cut-off voltage of 2.5 V.

The obtained lithium-ion battery was subjected to a cycle performance test and a Mn element dissolution test. The battery was charged at a constant current and constant voltage of 4.25 V and 1C until reaching a cut-off current of 0.05C. After full charging, the battery was discharged at a constant current of 1C to 2.5 V and subjected to the charge-discharge cycle of 500 cycles. Then, the negative electrode sheet obtained by disassembly a fully discharged battery (0% state of charge, SOC) was soaked in dimethyl carbonate (DMC) for 5 h. After drying, the electrode material was scraped into powder for inductively coupled plasma (ICP) testing to analyze manganese (Mn) element dissolution.

The test data are shown in Table 1.

**Table 1**

| / | Discharge HPPC@1C 30s | | | Discharge capacity retention rate | | | Cycle performance | Mn element dissolution |
|---|---|---|---|---|---|---|---|---|
| | 30%SOC | 50%SO C | 70%SO C | 1C | 2C | 3C | | |
| Example 1 | 86.7 µΩ | 76.7 µΩ | 74.4 µΩ | 96.1 % | 95.0 % | 94.2 % | 89.2 % | 7 ppm |
| Example 2 | 86.2 µΩ | 76.3 µΩ | 74.1 µΩ | 95.8 % | 94.9 % | 94.0 % | 87.2 % | 10 ppm |
| Example 3 | 87.7 µΩ | 77.5 µΩ | 75.3 µΩ | 95.4 % | 94.8 % | 93.4 % | 89.0 % | 6 ppm |
| Example 4 | 92.2 µΩ | 78.2 µΩ | 85.9 µΩ | 94.1 % | 94.4 % | 91.8 % | 89.0 % | 8 ppm |
| Example 5 | 90.8 µΩ | 82.6 µΩ | 76.9 µΩ | 95.9 % | 94.9 % | 94.0 % | 89.0 % | 7 ppm |
| Example 6 | 97.1 µΩ | 84.1 µΩ | 82.3 µΩ | 93.7 % | 92.7 % | 90.9 % | 87.2 % | 6 ppm |
| Example 7 | 86.5 µΩ | 76.6 µΩ | 74.8 µΩ | 95.3 % | 93.7 % | 91.8 % | 87.8 % | 7 ppm |
| Example 8 | 86.9 µΩ | 76.8 µΩ | 74.7 µΩ | 95.9 % | 94.7 % | 93.4 % | 88.9 % | 9 ppm |
| Example 9 | 86.4 µΩ | 76.2 µΩ | 75.0 µΩ | 95.8 % | 93.5 % | 92.1 % | 88.3 % | 8 ppm |
| Comparative Example 1 | 101.3 µΩ | 89.7 µΩ | 88.0 µΩ | 93.4 % | 91.2 % | 90.3 % | 86.0 % | 11 ppm |
| Comparative Example 2 | 96.3 µΩ | 85.7 µΩ | 87.3 µΩ | 94.3 % | 92.1 % | 91.2 % | 86.9 % | 9 ppm |
| Comparative Example 3 | 87.1 µΩ | 77.8 µΩ | 79.4 µΩ | 95.7 % | 93.9 % | 94.0 % | 84.3 % | 10 ppm |
| uncoated LiMn_{0.5}Fe_{0.5} PO₄ | 105.2 µΩ | 92.4 µΩ | 96.5 µΩ | 92.2 % | 89.5 % | 85.3 | 82.3 % | 14 ppm |

The following analysis can be drawn from Table 1.

The battery in Example 1 shows a higher battery discharge capacity retention and cycle performance than that in Example 5, and indicating that the amount of SiO₂ and the amount of TiO₂ produced affected the discharge capacity retention and cycle performance of the battery.

The batteries in Examples 1 to 5 have a smaller internal resistance, less Mn element dissolution and a higher discharge capacity retention rate than that in Example 6, indicating that the SiO₂ amount affects the performance of the battery. The battery in Example 1 has a smaller internal resistance, less Mn element dissolution, a higher discharge capacity retention rate, and a higher cycle performance, compared with Examples 8 and 9, showing that the sintering temperature affects the performance of the battery.

The batteries of Examples have smaller internal resistance, less Mn element dissolution, higher discharge capacity retention rate, and higher cycle performance compared with that in Comparative Example 1, because the surfaces of the lithium manganese iron phosphate particles in the positive electrode material of the battery of Example 1 are sequentially coated with SiO₂ particles and TiO₂ particles, while the surfaces of the lithium manganese iron phosphate particles in the positive electrode material of the battery of Comparative Example 1 are coated with a mixture of SiO₂ particles and TiO₂ particles.

The batteries of Examples have a lower internal resistance, a higher discharge capacity retention rate, and a higher cycle performance compared with that in Comparative Example 2, because the surfaces of the lithium manganese iron phosphate particles of the positive electrode material of the battery of Example 2 are coated with SiO₂ particles and TiO₂ particles in sequence, while the surfaces of the lithium manganese iron phosphate particles of the positive electrode material of the battery of Comparative Example 2 are coated with SiO₂ particles alone.

The batteries of Examples have a higher battery cycle performance compared with that in Comparative Example 3, because the surfaces of the lithium manganese iron phosphate particles of the positive electrode material of the batteries of Examples have are coated with SiO₂ particles and TiO₂ particles in sequence, and the surfaces of the lithium manganese iron phosphate particles of the positive electrode material of the battery of the Comparative Example 3 are coated with TiO₂ particles alone.

The batteries of Examples have a smaller internal resistance, less Mn element dissolution, a higher discharge capacity retention rate, and a higher cycle performance compared with a battery made of uncoated LiMn_{0.5}Fe_{0.5}PO₄ powder, indicating that the performance of the battery can be improved by sequentially coating the LiMn_{0.5}Fe_{0.5}PO₄ powder with SiO₂ and TiO₂.

## Claims

1. A positive electrode material comprising: lithium manganese iron phosphate particles, and a first shell layer and a second shell layer that sequentially coat a surface of each of the lithium manganese iron phosphate particles, wherein a material of the first shell layer comprises nanoscale SiO₂ particles and a material of the second shell layer comprises nanoscale TiO₂ particles.

2. The positive electrode material according to claim 1, wherein the SiO₂ particles have an average particle size less than or equal to 8 nm; and/or,
the TiO₂ particles have an average particle size less than or equal to 8 nm; and/or,
the lithium manganese iron phosphate particles are represented by a chemical formula of LiMnₓFe₍₁₋ₓ₎PO₄, wherein 0.1≤X≤0.9.

3. The positive electrode material according to claim 1 or 2, wherein a mass ratio of the SiO₂ particles, the TiO₂ particles, and the lithium manganese iron phosphate particles in the positive electrode material is (0.3%-0.7%): (0.3%-0.7%): (98.6%-99.4%).

4. A method of preparing a positive electrode material comprising the following steps:
dispersing SiO₂ particles in an alcohol solvent to obtain a mixed system, adding lithium manganese iron phosphate particles into the mixed system, followed by first heating and stirring to obtain first solid particles; and
coating the first solid particles with nanoscale TiO₂ particles to obtain the positive electrode material.

5. The method according to claim 4, wherein
a mass ratio of the SiO₂ particles, the TiO₂ particles and the lithium manganese iron phosphate particles in the positive electrode material is (0.3%-0.7%): (0.3%-0.7%): (98.6%-99.4%); and/or,
the first heating is performed at a temperature of 60°C to 90°C for 4 h to 12 h.

6. The method according to claim 4 or 5, wherein the step of coating the first solid particles with nanoscale TiO₂ particles comprises:
dispersing tetra-n-butyl titanate in anhydrous ethanol, and mixing the dispersed tetra-n-butyl titanate with the first solid particles to obtain a suspension; and
adding a water-containing solution to the suspension, followed by a second heating and stirring.

7. The method according to claim 6, wherein
the second heating is performed at a temperature of 50°C to 70°C for 4 h to 8 h.

8. The method according to claim 6 or 7, wherein the step of adding the water-containing solution to the suspension comprises:
adding an aqueous ethanol solution to the suspension.

9. The method according to claim 8, wherein a volume ratio of ethanol to water in the aqueous ethanol solution is (1-3): 1.

10. The method according to any one of claims 4 to 8, further comprising:
performing sintering after coating the first solid particles with the nanoscale TiO₂ particles, to obtain the positive electrode material.

11. The method according to claim 9, wherein
the sintering is performed at a temperature of 400°C to 600°C for 3 h to 6 h.

12. A positive electrode sheet comprising the positive electrode material according to any one of claims 1 to 3 or the positive electrode material prepared by the method according to any one of claims 4 to 11.

13. A battery comprising the positive electrode sheet according to claim 12.
